# EUROPEAN PATENT SPECIFICATION

(11) **EP 2 584 209 B1**
(45) Date of publication and mention of the grant of the patent: **14.05.2014**
(21) Application number: 12188755.8
(22) Date of filing: 17.10.2012
(51) Int. Cl.: F16C 29/04, F16C 29/12

(54) **Linear guideway arrangement**
Linearschienenführungsanordnung
Agencement de guidage linéaire

(30) Priority: 17.10.2011 WO PCT/EP2011/068120
(43) Date of publication of application: 24.04.2013
(73) Proprietor: NTN-SNR Roulements, 74000 Annecy (FR)
(72) Inventor: Grote, Detlef, 33818 Leopoldshöhe (DE)
(74) Representative: Bugnion Genève

(56) References cited:
- EP-A2- 0 686 784
- US-A- 2 992 620
- US-A- 5 642 941
- US-A1- 2009 268 993
- US-B1- 6 371 647

## Description

### TECHNICAL FIELD OF THE INVENTION

The present invention relates to linear guide way arrangement for use e.g. in a linear module powered by a belt, a pair of cables or a drive screw.

### BACKGROUND ART

Prior art document US 3,998,497 discloses a linear guideway arrangement for guiding a carriage along a linear path defined by first and second horizontal parallel guide rods. First and second roller assemblies are fixed to the carriage and rollingly connect the carriage to the first guide rod. A third roller assembly fixed to the other side of the carriage rollingly connects the carriage to the second guide rod. The third roller assembly comprises a shaft fixed to the carriage and a roller carried by the shaft, which rollingly rides on the top of the second guide rod. The first and second roller assemblies each comprise a shaft fixed to the carriage carrying first and second rollers spaced from each other along the shaft. The first and second rollers straddle the top of the first guide rod and rollingly ride on the upper surface thereof. The apparatus further comprises a shaft fixed to the carriage and which carries a roller, the top of which rollingly engages with the lower surface of the first guide rod. In order to avoid undesired play between the rollers and guide rods, the carriage has to be mounted on the guide rods with some interference, which results in excessive and uncontrolled friction and wear between the rollers and the guide rods.

US 6,648,508 discloses a linear guide comprises a travelling carriage having track rollers for support and for rolling along a guide rail, said track rollers, each of which rolls on the guide rail, being mounted in pairs for rotation on a first support that is arranged on a first carriage plate of the travelling carriage. The travelling carriage comprises a further carriage plate with a second support arranged thereon, and track rollers rotatably mounted on said second support for rolling on a further guide rail, the two guide rails being parallel to each other and fixed on two longitudinal sides of a central rail support. This system makes it possible to adjust tolerances in one direction transverse to the translation direction, but not in other directions. Moreover, it cannot guarantee equal load capacity in all directions due to tolerances and adjustment problems during assembling.

US 2,992,620 discloses a linear guideway arrangement comprising: two lateral tracks parallel to a translation axis of the linear guideway arrangement and spaced apart from one another in a first transverse direction perpendicular to the translation axis; and a carriage comprising a central part and at least two legs spaced apart from one another in the first transverse direction, each of the two legs corresponding to one of the lateral tracks, each of the two legs comprising at least one set of first rollers comprising at least one first roller rotating about a first rotation axis fixed relative to the carriage and perpendicular to the translation axis, wherein each of the two legs is provided with at least one rolling shoe comprising at least one set of second rollers comprising at least one second roller rotating about a second rotation axis fixed relative to the rolling shoe and perpendicular to the translation axis, the rolling shoe of each of the two legs being moveable with respect to the carriage in a protruding direction perpendicular to the translation axis between a retracted and a protruding positions, the arrangement being further provided with releasable fastening means for releasably fastening the rolling shoe of each of the two legs relative to the carriage in any intermediate position between the retracted and protruding positions. The position of the rolling shoe of each of the two legs and the contact pressure between the set of second rollers and the lateral track may be difficult to adjust upon assembly of the carriage on the tracks.

US 5,642,941 discloses a linear guidance device comprising: a rail defining a path of movement of a movable assembly and rollers secured to said movable assembly; the rollers being mounted in an elastically deformable block so as to apply the rollers to the rail while exerting a predetermined and substantially constant contact pressure on the guidance rail; the elastically deformable block comprising at least two rigid portions interconnected by means forming an elastic hinge, the means forming an elastic hinge comprising at least one wall of small thickness constituting a region of deformation and permitting relative pivoting between said two rigid portions; and means for adjustment of the contact pressure of the rollers on the guidance rail; said adjustment means comprising an elastic means applying the force of a spring to said elastically deformable block.

### SUMMARY OF THE INVENTION

The invention aims at solving the above-described problems.

According to the invention, which is defined by the technical features set forth in claim 1, there is provided a linear guideway arrangement comprising: two lateral tracks parallel to a translation axis of the linear guideway arrangement and spaced apart from one another in a first transverse direction perpendicular to the translation axis; and a carriage comprising a central part and at least two legs spaced apart from one another in the first transverse direction, each of the two legs corresponding to one of the lateral tracks, each of the two legs comprising at least one set of first rollers comprising at least one first roller rotating about a first rotation axis fixed relative to the carriage and perpendicular to the translation axis, wherein each of the two legs is provided with at least one rolling shoe comprising at least one set of second rollers comprising at least one second roller rotating about a second rotation axis fixed relative to the rolling shoe and perpendicular to the translation axis, the rolling shoe of each of the two legs being moveable with respect to the carriage in a protruding direction perpendicular to the translation axis between a retracted and a protruding positions, the arrangement being further provided with releasable fastening means for releasably fastening the rolling shoe of each of the two legs relative to the carriage in any intermediate position between the retracted and protruding positions.

Each one of two lateral tracks comprises a first guide rod and a second guide rod parallel to the translation axis of the linear guideway arrangement and spaced apart from the first and second guide rods of the other one of the two lateral tracks in the first transverse direction perpendicular to the translation axis, the at least one first roller rolls on the first of guide rod of the corresponding lateral track. The at least one second roller rolls on the second rod of the corresponding lateral track. The protruding direction is a direction towards the second guide rod of the corresponding lateral track. The rolling shoe of each of the two legs is provided with biasing means for biasing the rolling shoe towards the second guide rod of the corresponding track in the protruding direction.

Thanks to the releasable fastening means, it is possible to adjust the position of the rolling shoe with respect to the carriage so that a controlled contact pressure is ensured between the rollers and guide rods. Before assembly of the guideway arrangement, each guide leg forms a preassembled subunit with its guide shoe retained in the cavity by the axial clamping releasable fastening means and the loaded biasing means. The guide shoe is pushed in its retracted position against the biasing force of the biasing means and the releasable fastening means are tightened to keep this position. The carriage is easy to insert into the frame. Once the legs are in place into the respective lateral tracks, the releasable fastening means are loosened. The biasing means automatically push the roller shoes towards the protruding position in the protruding direction, until the second rollers engage with the second rods at the appropriate contact pressure defined by the biasing means. The releasable fastening means are then tightened once again, to secure the position of each rolling shoe relative to the associated leg. At the end of this step, the assembly of the guideway arrangement is complete.

According to one embodiment, the releasable fastening means include screws.

According to one embodiment, the biasing means include springs.

For each of the two legs, the first rotation axis is preferably parallel to the second rotation axis.

Each of the two pairs of guide rods defines a corresponding reference plane, each reference plane containing the guide rods of the corresponding pair of guide rods. This reference plane is preferably perpendicular to the rotation axes of the leg rollers and of the shoe roller rolling on the guide rods of the corresponding pair of guide rods.

According to a preferred embodiment, the reference planes of the two pairs of guide rods are an angle relative to one another. In particular, the reference planes of the two pairs of guide rods can be perpendicular to one another.

According to a preferred embodiment, the first guide rods of the two pairs of guide rods are closer to one another than the second guide rods of the two pairs of guide rods.

According to a preferred embodiment, the two pairs of guide rods define a plane of symmetry parallel to the translation axis, the first rods of the two pairs of rods being on each side of and at equal distance from the plane of symmetry, the second rods of the two pairs of rods being on each side of and at equal distance from the plane of symmetry. According to a preferred embodiment, the plane of symmetry is a vertical plane and the first rods of the two pairs of guide rods are above the second guide rods of the two pairs of guide rods.

According to a preferred embodiment, each set of first rollers comprises at least two first rollers rotating about two first rotation axes fixed relative to the carriage, perpendicular to the translation axis and spaced apart from one another along the translation axis.

According to a preferred embodiment, each set of second rollers comprises two second rollers rotating about two second rotation axes fixed relative to the rolling shoe, perpendicular to the translation axis and spaced apart from one another along the translation axis.

### DESCRIPTION OF THE DRAWINGS

Other advantages and features of the invention will then become more clearly apparent from the following description of a specific embodiment of the invention given as a non-restrictive example only and represented in the accompanying drawings in which:
- figure 1 is a diagrammatic illustration of a guideway arrangement according to an embodiment of the invention;

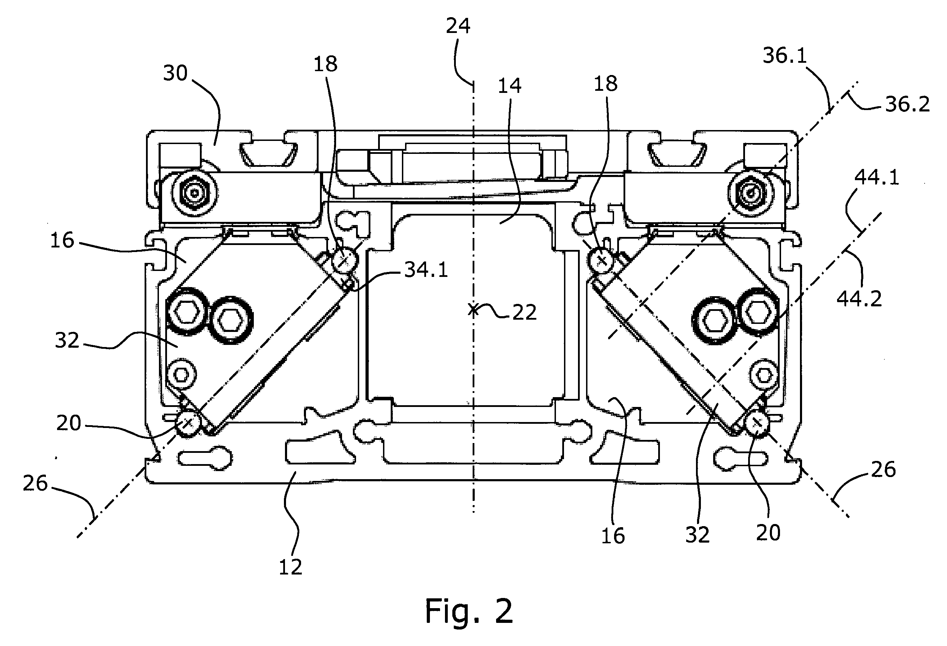

- figure 2 is a cross-section of the guideway arrangement of figure 1;

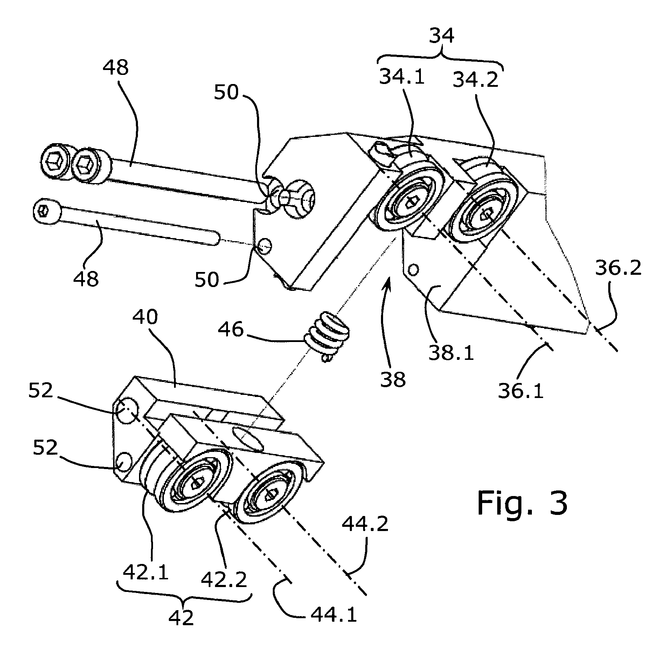

- figure 3 is a detail of a leg and a shoe of the guideway arrangement of figure 1;

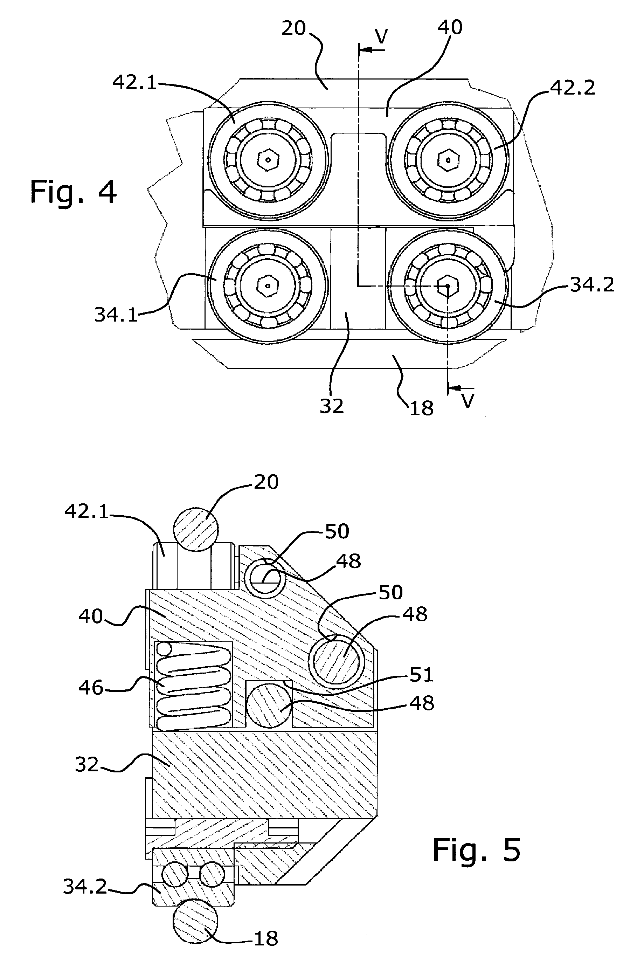

- figure 4 is a side view of a leg of the guideway arrangement of figure 1;
- figure 5 is a section along the line V-V of figure 4.

Throughout the description and drawings, identical reference numbers will be used to indicate identical or similar elements.

### DETAILED DESCRIPTION OF A PREFERED EMBODIMENT

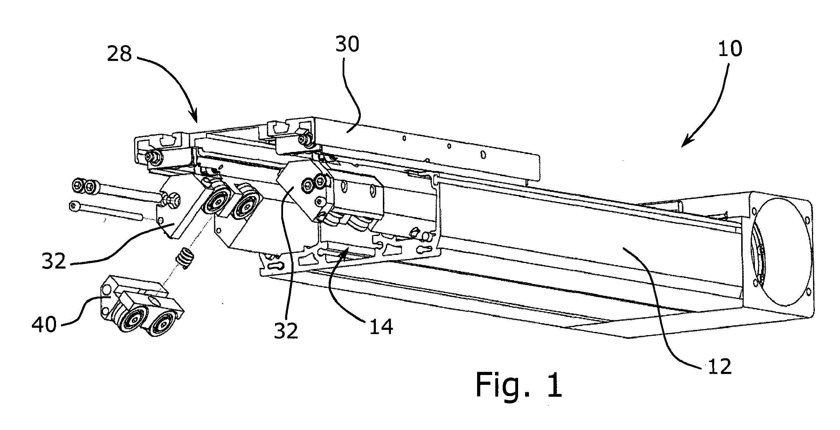

With reference to Figure 1, a linear guideway arrangement **10** comprises a frame **12** made of an extruded aluminium profile. The frame **12** is provided with a central track **14** for receiving e.g. a drive screw or a drive belt and two lateral tracks **16** on each side of the central track **14.** Each lateral track **16** is provided with a pair of guide rods **18, 20.** The guide rods **18, 20** are parallel to a translation axis **22** of the linear guideway arrangement. Each pair of guide rods includes a first, upper guide rod **18** and a second, lower guide rod **20.** A plane of symmetry **24** can be defined, which is at mid distance between the two pairs of guide rods **18, 20.** The first guide rods **18** of the two tracks **16** are spaced apart from one another on each side of and at equal distance from the plane of symmetry. Similarly, the second guide rods **20** are spaced apart from one another on each side of and at equal distance from the plane of symmetry. For each track **16,** a reference plane **26** can be defined, which is parallel to the translation axis **22** and contains a centre line of the respective first and second guide rods **18, 20.** The two planes **26** are at an angle relative to one another, preferably between 60° and 120°, e.g. a right angle.

A carriage **28** is mounted on the guideway frame **12** for moving fore and aft parallel to the translation axis **22.** The carriage **28** includes a central plate **30** and two legs **32** on each side of the central plate **30.** The central plate **30** and the two legs **32** form a rigid, i.e. non-deformable structure. Each of the two legs **32** is received in a corresponding one of the two tracks **16** as will be explained hereinafter.

Each leg **32** comprises a set **34** of first rollers, in the present case a set of two first rollers **34.1, 34.2,** rolling on the first guide rod **18** of the corresponding track **16.** The first rollers of each leg **32** have rotation axes **36.1, 36.2** that are fixed relative to the respective leg **32**, spaced apart from one another and perpendicular to the reference plane **26** of the respective leg **32**.

Each leg **32** comprises a cavity **38** for receiving a guide shoe **40** provided with a set **42** of second rollers, in the present case of two second rollers **42.1, 42.2,** rolling on the second guide rod **20** of the corresponding track **16.** The second rollers **42.1, 42.2** of each leg **32** have rotation axes **44.1, 44.2** that are fixed relative to the respective leg **32,** spaced apart from one another and perpendicular to the reference plane **26** of the respective leg **32.**

The cavity **38** of each leg has side walls **38.1** for guiding the guide shoe **40** in a protruding direction perpendicular to the first and second guide rods **18, 20** and to the first and second rotation axes **36.1, 36.2, 44.1, 44.2.** A compression spring **46** is loaded in the cavity **38** for pressing the second rollers **42.1, 42.2** of the guide shoe **40** against the second guide rod **20** and away from the first rollers **34.1, 34.2** and first guide rod **18.**

A set of axial clamping screws **48** is provided for fastening each guide shoe **40** in the cavity **38** of the associated leg **32.** Each screw **48** is received in through hole **50, 52** having a slightly larger diameter than the associated screw **48,** so as to allow a limited freedom of motion of the guide shoe **40** in the cavity **38** as long as the screws **48** are not tightened. Hence, when the screws are loosened, each of the guide shoes **40** is free to move at least in the protruding direction parallel to the reference plane **26** of the associated leg **32** and perpendicular to the rotation axes **36.1, 36.2, 44.1, 44.2** between a fully retracted position close to the first rollers **34.1, 34.2** and a protruding position away from the first rollers **34.1, 34.2.**

Before assembly of the guideway arrangement, each guide leg **32** forms a preassembled subunit with its guide shoe **40** retained in the cavity **38** by the axial clamping screws and the loaded spring. The guide shoe **40** is pushed in its retracted position against the biasing force of the spring **46** and the screws **48** are tightened to keep this position. The carriage **28** is easy to insert into the frame. Once the legs **32** are in place into the respective lateral tracks **16,** the screws **48** are loosened. The springs **46** automatically push the roller shoes **40** towards the protruding position in the protruding direction, until the second rollers **42., 42.2** engage with the second rods **20** at the appropriate contact pressure defined by the spring **46.** The screws **48** are then tightened once again, to secure the position of each rolling shoe **40** relative to the associated leg **32.** At the end of this step, the assembly of the guideway arrangement **10** is complete.

Various modifications are possible without departing from the scope of the appended claims.

The guide rods illustrated in the drawings have a circular cross-section. However, other cross-sectional shapes are possible. The shape of the rollers, which in the drawings include a central groove, may be changed accordingly.

While the carriage has been described with two legs **32,** each provided with one rolling shoe **40**, it is to be understood that the number of legs **32** and rolling shoes may vary.

The intersecting reference planes **26** of the two legs are preferred in all situations in which loads or vibrations in several directions perpendicular to the fore and aft direction of the rods is to be expected. The two pairs of guide rods **18**, **20** may be coplanar, i.e. on one and the same reference plane **26**. Such an embodiment will be preferred if no load is expected on the carriage perpendicular to the reference plane **26**. According to another embodiment, the reference planes **26** of the two legs can be parallel to one another, if no lateral load perpendicular to the reference planes is expected.

Each set **34**, **42** of rollers may have one or more rollers.

The screws can be replaced with other fastening means, e.g. a rotating key.

The same principle may be used with three guide rods.

## Claims

1. A linear guideway arrangement (10) comprising:
- two lateral tracks (16) parallel to a translation axis (22) of the linear guideway arrangement (10) and spaced apart from one another in a first transverse direction perpendicular to the translation axis;
- a carriage (28) comprising a central part (30) and at least two legs (32) spaced apart from one another in the first transverse direction, each of the two legs (32) corresponding to one of the lateral tracks, each of the two legs (32) comprising at least one set (34) of first rollers comprising at least one first roller (34.1, 34.2) rotating about a first rotation axis (36.1, 36.2) fixed relative to the carriage (28) and perpendicular to the translation axis (22), wherein each of the two legs (32) is provided with at least one rolling shoe (40) comprising at least one set (42) of second rollers comprising at least one second roller (42.1, 42.2) rotating about a second rotation axis (44.1, 44.2) fixed relative to the rolling shoe (40) and perpendicular to the translation axis (22), the rolling shoe (40) of each of the two legs (32) being moveable with respect to the carriage (28) in a protruding direction perpendicular to the translation axis (22) between a retracted and a protruding positions, the arrangement being further provided with releasable fastening means (48) for releasably fastening the rolling shoe (40) of each of the two legs (32) relative to the carriage (28) in any intermediate position between the retracted and protruding positions,
**characterised in that**
each one of two lateral tracks (16) comprises a first guide rod (18) and a second guide rod (20) parallel to the translation axis (22) of the linear guideway arrangement (10) and spaced apart from the first and second guide rods (18, 20) of the other one of the two lateral tracks (16) in the first transverse direction perpendicular to the translation axis,
the at least one first roller (34.1, 34.2) rolls on the first of guide rod (18) of the corresponding lateral track (16),
the at least one second roller (42.1, 42.2) rolls on the second rod (20) of the corresponding lateral track (16),
the protruding direction is a direction towards the second guide rod (20) of the corresponding lateral track (16),
the rolling shoe (40) of each of the two legs (32) is provided with biasing means (46) for biasing the rolling shoe (40) towards the second guide rod (20) of the corresponding track (16) in the protruding direction.

2. The linear guideway arrangement of claim 1, **characterised in that** the releasable fastening means comprise screws (48).

3. The linear guideway arrangment of claim 2, **characterised in that** the biasing means include springs (46).

4. The linear guideway arrangement of any one of the preceding claims, **characterised in that** for each of the two legs (32), the second rotation axis (44.1, 44.2) of the second roller (42.1, 42.2) is parallel to the first rotation axis (36.1, 36.2) of the first roller (34.1, 34.2).

5. The linear guideway arrangement of any one of the preceding claims, **characterised in that** each of the two lateral tracks (16) defines a corresponding reference plane (26), each reference plane (26) containing the guide rods (18, 20) of the corresponding lateral track (16) and being perpendicular to the rotation axis (36.1, 36.2) of the first roller (34.1, 34.2) and to the rotation axis (46.1, 46.2) of the second roller (44.1, 44.2) of the leg corresponding to the pair of guide rods.

6. The linear guideway arrangement of claim 5, **characterised in that** the reference planes (26) of the two lateral tracks (16) are at an angle relative to one another.

7. The linear guideway arrangement of claim 6, **characterised in that** the reference planes (26) of the two lateral tracks (16) are perpendicular to one another.

8. The linear guideway arrangement of any one of the preceding claims, **characterised in that** the first guide rods (18) of the two lateral track (16) are closer to one another than the second guide rods (20) of the two lateral track (16).

9. The linear guideway arrangement of any one of the preceding claims, **characterised in that** the two lateral tracks (16) define a plane of symmetry (24) of the linear guideway arrangement parallel to the translation axis (22).

10. The linear guideway arrangement of any one of the preceding claims, **characterised in that** each set of first rollers (34) comprises at least two first rollers (34.1, 34.2) rotating about two first rotation axes (36.1, 36.2) fixed relative to the carriage (28), perpendicular to the translation axis (22) and spaced apart from one another along the translation axis (22).

11. The linear guideway arrangement of any one of the preceding claims, **characterised in that** each set of second rollers (42) comprises at least two second rollers (42.1, 42.2) rotating about two second rotation axes (44.1, 44.2) fixed relative to the rolling shoe (40), perpendicular to the translation axis (22) and spaced apart from one another along the translation axis (22).

## Patentansprüche

1. Lineare Schienenführungsanordnung (10), umfassend:
- zwei seitliche Gleise (16), die parallel zu einer Translationsachse (22) der linearen Schienenführungsanordnung (10) und voneinander in einer ersten Querrichtung, senkrecht zur Translationsachse, beabstandet sind;
- einen Wagen (28), umfassend einen zentralen Teil (30) und mindestens zwei Füße (32), die voneinander in einer ersten Querrichtung beabstandet sind, wobei jeder der zwei Füße (32) einem der seitlichen Gleise entspricht, wobei jeder der zwei Füße (32) mindestens einen Satz (34) von ersten Rollen umfasst, umfassend mindesten eine erste Rolle (34.1, 34.2), die sich um eine erste Rotationsachse (36.1, 36.2) dreht, befestigt mit Bezug auf den Wagen (28) und senkrecht zur Translationsachse (22), wobei jeder der zwei Füße (32) mit mindestens einem rollenden Schuh (40) ausgestattet ist, umfassend mindestens einen Satz (42) von zweiten Rollen, umfassend mindestens eine zweite Rolle (42.1, 42.2), die sich um eine zweite Rotationsachse (44.1, 44.2) dreht, befestigt mit Bezug auf den rollenden Schuh (40) und senkrecht zur Translationsachse (22), wobei der rollende Schuh (40) jedes der zwei Füße (32) mit Bezug auf den Wagen (28) in einer hervorspringenden Richtung, senkrecht zur Translationsachse (22), zwischen einer zurückgezogenen und einer hervorspringenden Position beweglich ist, wobei die Anordnung weiter mit lösbaren Befestigungsmitteln (48) ausgestattet ist, um lösbar den rollenden Schuh (40) jedes der zwei Füße (32) mit Bezug auf den Wagen (28) in einer Zwischenposition zwischen der zurückgezogenen und der hervorspringenden Position zu befestigen,
**dadurch gekennzeichnet, dass**
jedes der zwei seitlichen Gleise (16) eine erste Führungsstange (18) und eine zweite Führungsstange (20) umfasst, parallel zur Translationsachse (22) der linearen Schienenführungsanordnung (10) und beabstandet von der ersten und von der zweiten Führungsstange (18, 20) des anderen der zwei seitlichen Gleise (16) in der ersten Querrichtung, senkrecht zur Translationsachse,
die mindestens eine erste Rolle (34.1, 34.2) auf der ersten Führungsstange (18) des entsprechenden seitlichen Gleises (16) rollt,
die mindestens eine zweite Rolle (42.1, 42.2) auf der zweiten Führungsstange (20) des entsprechenden seitlichen Gleises (16) rollt,
die hervorspringende Richtung eine Richtung hin zur zweiten Führungsstange (20) des entsprechenden seitlichen Gleises (16) ist,
der rollende Schuh (40) jedes der zwei Füße (32) mit Vorspannmitteln (46) ausgestattet ist, um den rollenden Schuh (40) hin zur zweiten Führungsstange (20) des Gleises (16) in der hervorspringenden Richtung zu spannen.

2. Lineare Schienenführungsanordnung nach Anspruch 1, **dadurch gekennzeichnet, dass** die lösbaren Befestigungsmittel Schrauben (48) umfassen.

3. Lineare Schienenführungsanordnung nach Anspruch 2, **dadurch gekennzeichnet, dass** die Vorspannungsmittel Federn (46) umfassen.

4. Lineare Schienenführungsanordnung nach einem der vorhergehenden Ansprüche, **dadurch gekennzeichnet, dass** bei jedem der zwei Füße (32) die zweite Rotationsachse (44.1, 44.2) der zweiten Rolle (42.1, 42.2) parallel zur ersten Rotationsachse (36.1, 36.2) der ersten Rolle (34.1, 34.2) ist.

5. Lineare Schienenführungsanordnung nach einem der vorhergehenden Ansprüche, **dadurch gekennzeichnet, dass** jedes der zwei seitlichen Gleise (16) eine entsprechende Bezugsebene (26) definiert, wobei jede Bezugsebene (26) die Führungsstangen (18, 20) des entsprechenden seitlichen Gleises (16) umfasst und senkrecht zur Rotationsachse (36.1, 36.2) der ersten Rolle (34.1, 34.2) und zur Rotationsachse (46.1, 46.2) der zweiten Rolle (44.1, 44.2) des Fußes ist, der dem Paar von Führungsstangen entspricht.

6. Lineare Schienenführungsanordnung nach Anspruch 5, **dadurch gekennzeichnet, dass** sich die Bezugsebenen (26) der zwei seitlichen Gleise (16) in einem Winkel mit Bezug aufeinander befinden.

7. Lineare Schienenführungsanordnung nach Anspruch 6, **dadurch gekennzeichnet, dass** die Bezugsebenen (26) der zwei seitlichen Gleise (16) senkrecht zueinander sind.

8. Lineare Schienenführungsanordnung nach einem der vorhergehenden Ansprüche, **dadurch gekennzeichnet, dass** die ersten Führungsstangen (18) der zwei seitlichen Gleise (16) näher aneinander als die zweiten Führungsstangen (20) der zwei seitlichen Gleise (16) sind.

9. Lineare Schienenführungsanordnung nach einem der vorhergehenden Ansprüche, **dadurch gekennzeichnet, dass** die zwei seitliche Gleise (16) eine Symmetrieebene (24) der linearen Schienenführungsanordnung parallel zur Translationsachse (22) definieren.

10. Lineare Schienenführungsanordnung nach einem der vorhergehenden Ansprüche, **dadurch gekennzeichnet, dass** jeder Satz von ersten Rollen (34) mindestens zwei erste Rollen (34.1, 34.2) umfasst, die sich um zwei erste Rotationsachsen (36.1, 36.2) drehen, befestigt mit Bezug auf den Wagen (28), senkrecht zur Translationsachse (22) und voneinander entlang der Translationsachse (22) beabstandet.

11. Lineare Schienenführungsanordnung nach einem der vorhergehenden Ansprüche, **dadurch gekennzeichnet, dass** jeder Satz von zweiten Rollen (42) mindestens zwei zweite Rollen (42.1, 42.2) umfasst, die sich um zwei zweite Rotationsachsen (44.1, 44.2) drehen, befestigt mit Bezug auf den rollenden Schuh (40), senkrecht zur Translationsachse (22), und voneinander entlang der Translationsachse (22) beabstandet.

## Revendications

1. Agencement de guidage linéaire (10) comprenant:
deux chemins latéraux (16) parallèles à un axe de translation (22) de l'agencement de guidage linéaire (10) et éloignés l'un de l'autre dans une première direction transversale perpendiculaire à l'axe de translation;
un chariot (28) comprenant une partie centrale (30) et au moins deux pattes (32) éloignées l'une de l'autre dans la première direction transversale, chacune des deux pattes (32) correspondant à l'un des chemins latéraux, chacune les deux pattes (32) comprenant au moins un ensemble (34) de premiers rouleaux comprenant au moins un premier rouleau (34.1, 34.2) tournant autour d'un premier axe de rotation (36.1, 36.2) fixe par rapport au chariot (28) et perpendiculaire à l'axe de translation (22), dans lequel chacune des deux pattes (32) est prévue avec au moins un coussinet de roulement (40) comprenant au moins un ensemble (42) de seconds rouleaux comprenant au moins un second rouleau (42.1, 42.2) tournant autour d'un second axe de rotation (44.1, 44.2) fixe par rapport au coussinet de roulement (40) et perpendiculaire à l'axe de translation (22), le coussinet de roulement (40) de chacune des deux pattes (32) étant mobile par rapport au chariot (28) dans une direction en saillie perpendiculaire à l'axe de translation (22) entre une position rétractée et une position en saillie, l'agencement étant en outre prévu avec des moyens de fixation amovibles (48) pour fixer de manière amovible le coussinet de roulement (40) de chacune des deux pattes (32) par rapport au chariot (28) dans n'importe quelle position intermédiaire entre les positions rétractée et en saillie,
**caractérisé en ce que**:
chacun des deux chemins latéraux (16) comprend une première tige de guidage (18) et une seconde tige de guidage (20) parallèles à l'axe de translation (22) de l'agencement de guidage linéaire (10) et éloignées des première et seconde tiges de guidage (18, 20) de l'autre des deux chemins latéraux (16) dans la première direction transversale perpendiculaire à l'axe de translation,
le au moins un premier rouleau (34.1, 34.2) roule sur la première tige de guidage (18) du chemin latéral (16) correspondant,
le au moins un second rouleau (42.1, 42.2) roule sur la seconde tige (20) du chemin latéral (16) correspondant,
la direction en saillie est une direction vers la seconde tige de guidage (20) du chemin latéral (16) correspondant,
le coussinet de roulement (40) de chacune des deux pattes (32) est prévu avec des moyens de sollicitation (46) pour solliciter le coussinet de roulement (40) vers la seconde tige de guidage (20) du chemin (16) correspondant dans la direction en saillie.

2. Agencement de guidage linéaire selon la revendication 1, **caractérisé en ce que** les moyens de fixation amovibles comprennent des vis (48).

3. Agencement de guidage linéaire selon la revendication 2, **caractérisé en ce que** les moyens de sollicitation comprennent des ressorts (46).

4. Agencement de guidage linéaire selon l'une quelconque des revendications précédentes, **caractérisé en ce que** pour chacune des deux pattes (32), le second axe de rotation (44.1, 44.2) du second rouleau (42.1, 42.2) est parallèle au premier axe de rotation (36.1, 36.2) du premier rouleau (34.1, 34.2).

5. Agencement de guidage linéaire selon l'une quelconque des revendications précédentes, **caractérisé en ce que** chacun des deux chemins latéraux (16) définit un plan de référence (26) correspondant, chaque plan de référence (26) contenant les tiges de guidage (18, 20) du chemin latéral (16) correspondant et étant perpendiculaire à l'axe de rotation (36.1, 36.2) du premier rouleau (34.1, 34.2) et à l'axe de rotation (46.1, 46.2) du second rouleau (44.1, 44.2) de la patte correspondant à la paire de tiges de guidage.

6. Agencement de guidage linéaire selon la revendication 5, **caractérisé en ce que** les plans de référence (26) des deux chemins latéraux (16) sont à un angle l'un par rapport à l'autre.

7. Agencement de guidage linéaire selon la revendication 6, **caractérisé en ce que** les plans de référence (26) des deux chemins latéraux (16) sont perpendiculaires entre eux.

8. Agencement de guidage linéaire selon l'une quelconque des revendications précédentes, **caractérisé en ce que** les premières tiges de guidage (18) des deux chemins latéraux (16) sont plus près l'une de l'autre que les secondes tiges de guidage (20) des deux chemins latéraux (16).

9. Agencement de guidage linéaire selon l'une quelconque des revendications précédentes, **caractérisé en ce que** les deux chemins latéraux (16) définissent un plan de symétrie (24) de l'agencement de guidage linéaire parallèle à l'axe de translation (22).

10. Agencement de guidage linéaire selon l'une quelconque des revendications précédentes, **caractérisé en ce que** chaque ensemble de premiers rouleaux (34) comprend au moins deux premiers rouleaux (34.1, 34.2) tournant autour des deux premiers axes de rotation (36.1, 36.2) fixes par rapport au chariot (28), perpendiculaires à l'axe de translation (22) et espacés l'un de l'autre le long de l'axe de translation (22).

11. Agencement de guidage linéaire selon l'une quelconque des revendications précédentes, **caractérisé en ce que** chaque ensemble de seconds rouleaux (42) comprend au moins deux seconds rouleaux (42.1, 42.2) tournant autour de deux seconds axes de rotation (44.1, 44.2) fixes par rapport au coussinet de roulement (40), perpendiculaires à l'axe de translation (22) et espacés l'un de l'autre le long de l'axe de translation (22).
